Europäisches Patentamt

European Patent Office

Office européen des brevets

(19)

(11) Numéro de publication: **0 338 900**
**A1**

# (12) DEMANDE DE BREVET EUROPEEN

(21) Numéro de dépôt: **89401032.1**

(22) Date de dépôt: **14.04.89**

(51) Int. Cl.⁴: **H 01 R 23/68**
**G 06 K 7/06**

(30) Priorité: **19.04.88 FR 8805140**

(43) Date de publication de la demande:
**25.10.89 Bulletin 89/43**

(84) Etats contractants désignés:
**BE CH DE ES FR GB IT LI LU NL SE**

(71) Demandeur: **COMPAGNIE EUROPEENNE DE COMPOSANTS ELECTRONIQUES LCC**
**50, rue Jean-Pierre Timbaud**
**F-92400 Courbevoie (FR)**

(72) Inventeur: **Chabrolle, Jacques**
**SCPI Cedex 67**
**F-92045 Paris la Defense (FR)**

**Guyon, Jean-Claude**
**SCPI Cedex 67**
**F-92045 Paris la Defense (FR)**

(74) Mandataire: **Guérin, Michel et al**
**THOMSON-CSF SCPI**
**F-92045 PARIS LA DEFENSE CEDEX 67 (FR)**

(54) **Dispositif de mise en contact électrique de conducteurs répartis sur deux éléments et notamment entre ceux d'une carte à mémoire et ceux de son lecteur.**

(57) L'invention concerne un dispositif de mise en contact électrique de conducteurs répartis sur un premier (20) et sur un deuxième élément (14), la mise en contact des conducteurs devant être réalisée lorsque le premier élément se trouve dans une position déterminée par rapport au deuxième élément. Le dispositif comprend, entre autres, un guide (1) du premier élément vers la position déterminée et une butée destinée (8) à arrêter le premier élément lorsqu'il a atteint cette position déterminée, la butée comprenant des moyens permettant de mettre progressivement en contact les conducteurs.
Application aux lecteurs de cartes à mémoire.

FIG_1

**Description**

# DISPOSITIF DE MISE EN CONTACT ELECTRIQUE DE CONDUCTEURS REPARTIS SUR DEUX ELEMENTS ET NOTAMMENT ENTRE CEUX D'UNE CARTE A MEMOIRE ET CEUX DE SON LECTEUR.

La présente invention concerne un dispositif de mise en contact électrique de conducteurs répartis sur deux éléments et utilisable notamment pour assurer les liaisons électriques entre les sorties du circuit intégré d'une carte à mémoire et la partie électronique du lecteur de carte.

L'exploitation des cartes magnétiques est actuellement très développée. La carte magnétique (de crédit ou de paiement) joue un rôle analogue à celui du carnet de chèques ou des espèces. Elle constitue un nouveau système de paiement qui a reçu le nom de monétique. Elle se présente sous la forme d'un rectangle de plastique et comporte un certain nombre d'informations qui sont, soit gravées en relief sur le plastique pour pouvoir être reproduites par pression dans le cas où la transaction se fait par l'établissement d'une facturette papier, soit enregistrées électroniquement sur des pistes magnétiques pour pouvoir être lues (et parfois modifiées) par les lecteurs et encodeurs de cartes qui équipent les distributeurs de billets ou les terminaux de transaction.

La multiplication des distributeurs automatiques de billets et des terminaux points de vente a joué en faveur des cartes à pistes magnétiques. Une normalisation internationale s'est imposée sous l'appellation ISO (pistes ISO 1, ISO 2, ISO 3). Chaque piste peut contenir au maximum 100 caractères, ce qui représente une faible capacité de mémorisation. L'une des pistes peut être utilisée en mode écriture, avec une capacité limitée, mais cela nécessite un entraînement à vitesse constante ce qui exclut les lecteurs manuels dits à passage. Selon ces lecteurs, la carte magnétique est glissée manuellement dans une fente de l'appareil. Au cours de son transfert d'une extrémité à l'autre de la fente, une piste magnétique associée à la carte défile devant une tête de lecture qui exploite les bits magnétiques constituant l'encodage de la piste.

Les pistes magnétiques présentent un autre inconvénient constitué par une sécurité imparfaite, ce qui pose le problème du contrôle d'accès et de la facturation des services télématiques.

Pour l'exploitation en contrôle d'accès, il est plus souvent fait appel à un lecteur à introduction frontale. La carte est introduite par l'un de ses petits côtés et engagée en butée sur les trois quarts de sa longueur. Le lecteur est équipé d'une tête de lecture pour le traitement de la piste et la lecture se fait suivant les cas à l'introduction ou à l'extraction de la carte.

La carte à circuit intégré, plus communément appelée carte à mémoire, permet de résoudre les problèmes que présentaient les cartes à pistes magnétiques classiques : faible capacité de mémorisation, insécurité d'accès et de facturation. Dans la carte dite à mémoire est inséré un circuit intégré composé au minimum d'une mémoire et d'une logique. La carte à mémoire supporte également une piste magnétique contenant des informations qui n'ont pas besoin d'être particulièrement protégées.

La mise en service progressive de cartes mixtes, c'est-à-dire simultanément équipées d'une piste magnétique et d'une "puce électronique" (type CP8) a nécessité la mise en place de matériels adaptés.

Ainsi, l'exploitation d'un lecteur à passage conduit l'équipementier à placer un lecteur spécifique en prolongement de celui-ci. D'autres types de matériels se présentent sous la forme d'un boîtier incorporant les deux types de lecteurs permettant l'exploitation de l'un ou l'autre suivant les cas.

Le problème qui se pose avec l'apparition des cartes à mémoire est celui de la prise de contact électrique entre la partie électronique du lecteur et les sorties (au nombre de 8) du circuit intégré inséré dans la carte. Cette prise de contact est particulièrement délicate et doit satisfaire aux impératifs suivants :
- assurer une très bonne liaison électrique, entre la partie électronique de traitement et les contacts extérieurs de la carte en raison des très faibles courants mis en oeuvre pour le traitement,
- ne pas détériorer les contacts de la carte afin d'assurer à celle-ci une grande durée de vie (plusieurs milliers de transactions),
- éviter le contact avec la partie plastique de la carte, ce qui pourrait être générateur de mauvais contacts électriques par détérioration des contacts extérieurs,
- faire cependant appel à un dispositif mécanique simple afin d'assurer un prix de revient faible compatible avec une grande diffusion de ce matériel.

Pour satisfaire à ces impératifs, l'invention propose un dispositif de prise de contacts électriques original, pouvant s'appliquer en particulier, mais pas exclusivement, dans un lecteur frontal. Un lecteur frontal ainsi constitué permet, dans le domaine du contrôle d'accès, l'exploitation des cartes mixtes.

L'invention a donc pour objet un dispositif de mise en contact électrique de conducteurs répartis sur un premier et sur un deuxième élément, la mise en contact des conducteurs devant être réalisée lorsque le premier élément se trouve dans une position déterminée par rapport au deuxième élément, le dispositif étant solidaire du deuxième élément. Le dispositif comprend :
- des moyens de guidage du premier élément vers ladite position déterminée,
- une butée destinée à arrêter le premier élément lorsqu'il a atteint ladite position déterminée, la butée comprenant des moyens permettant de mettre progressivement en contact lesdits conducteurs.

L'invention sera mieux comprise et d'autres avantages apparaîtront à la lecture de la description qui va suivre, donnée à titre non limitatif et grâce aux dessins annexés parmi lesquels :
- la figure 1 représente un dispositif selon l'invention de mise en contact électrique de conducteurs répartis sur deux éléments,
- les figures 2 et 3 sont des vues détaillées de certaines parties du dispositif représenté à la figure 1,
- les figures 4 à 6 sont des figures explicatives du fonctionnement du dispositif de la figure 1.

Le dispositif selon l'invention de mise en contact électrique de conducteurs répartis sur deux éléments par réunion ou approche de ces deux éléments peut s'appliquer à un nombre considérable de domaines techniques. A titre d'exemple, on traitera ici de l'application particulière de la mise en contact électrique des conducteurs d'une carte à mémoire avec ceux de son lecteur.

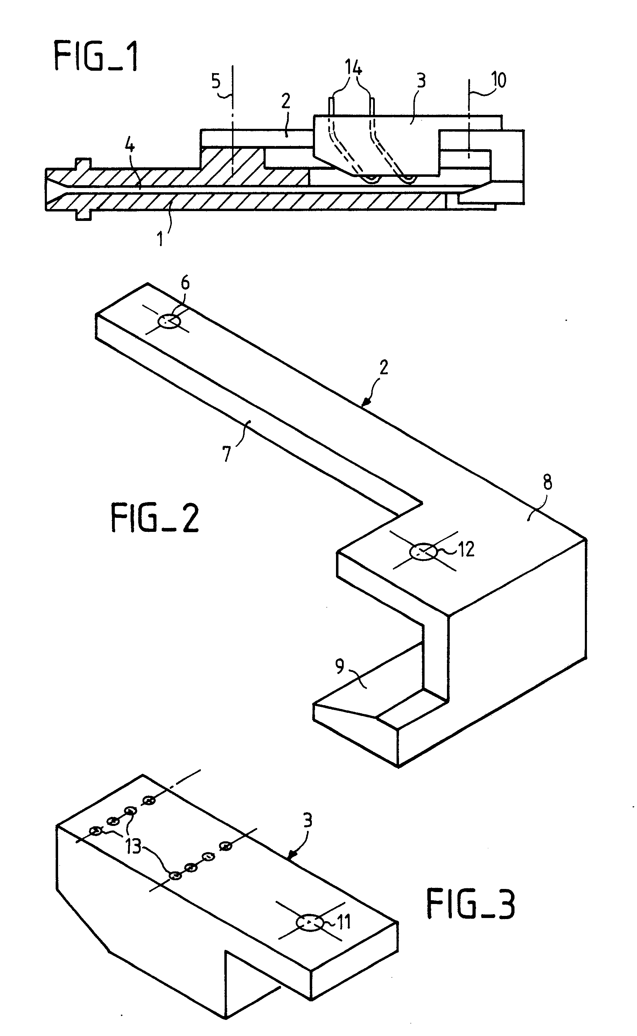

La figure 1 représente un tel dispositif qui est constitué par l'assemblage de différentes parties dont certaines sont mieux détaillées aux figures 2 et 3.

Le dispositif de mise en contact électrique représenté à la figure 1 comprend trois parties essentielles : un guide de carte 1, une lame souple 2 et un porte-contacts 3.

Le guide de carte 1 joue le rôle de moyens de guidage de la carte mémoire. Il a la forme d'un parallélépipède plat correspondant à la carte qu'il doit recevoir. Il est pourvu d'une fente 4 permettant l'introduction de la carte à mémoire. Sur la figure 1, seul le guide de carte a été représenté en coupe pour permettre une meilleure compréhension du dispositif. Le guide de carte peut être réalisé en matériau plastique moulé ou en métal auquel cas il peut être mis en forme par emboutissage et découpe.

Sur le guide, et selon cette application particulière, est fixée la lame souple 2. La fixation peut être réalisée simplement au moyen d'une vis selon l'axe 5 correspondant au trou 6 sur la figure 2. La lame 2 peut être réalisée en plastique, ce qui permet d'obtenir facilement sa forme un peu complexe. La lame 2 comprend un bras 7 dont l'une de ses extrémités est percée du trou 6 et dont l'autre extrémité est prolongée par une partie 8 ayant la forme d'un C et de largeur supérieure à la largeur du bras 7. La partie 8 servira de butée à la carte à mémoire. Elle présente une rampe 9 à sa partie inférieure.

Le porte-contacts 3 est fixé selon l'axe 10 sur la lame souple 2. La fixation peut se faire par vis grâce au trou 11 percé dans le porte-contacts et au trou taraudé 12 percé dans la lame 2. Ces trous correspondent à l'axe 10 représenté à la figure 1. La mise en place du porte-contacts sur la lame se fait très facilement puisque ces pièces s'emboîtent l'une dans l'autre. Le porte-contacts est percé de trous 13 (au nombre de huit pour une carte type CP8) permettant le passage de conducteurs électriques ou contacts 14 de sa face supérieure à sa face inférieure. Le porte-contacts 3 pouvant être réalisé en plastique, on peut obtenir facilement, lors du moulage de la pièce, le profil désiré pour les trous 13 et par exemple celui montré à la figure 1. Les parties des contacts 14 débouchant sur la face inférieure du porte-contacts sont repliées vers la même face en forme de crosse déformable élastiquement.

Le dispositif de la figure 1 est fixé au lecteur de cartes et les contacts 14 sont alors réunis aux circuits électroniques de traitement.

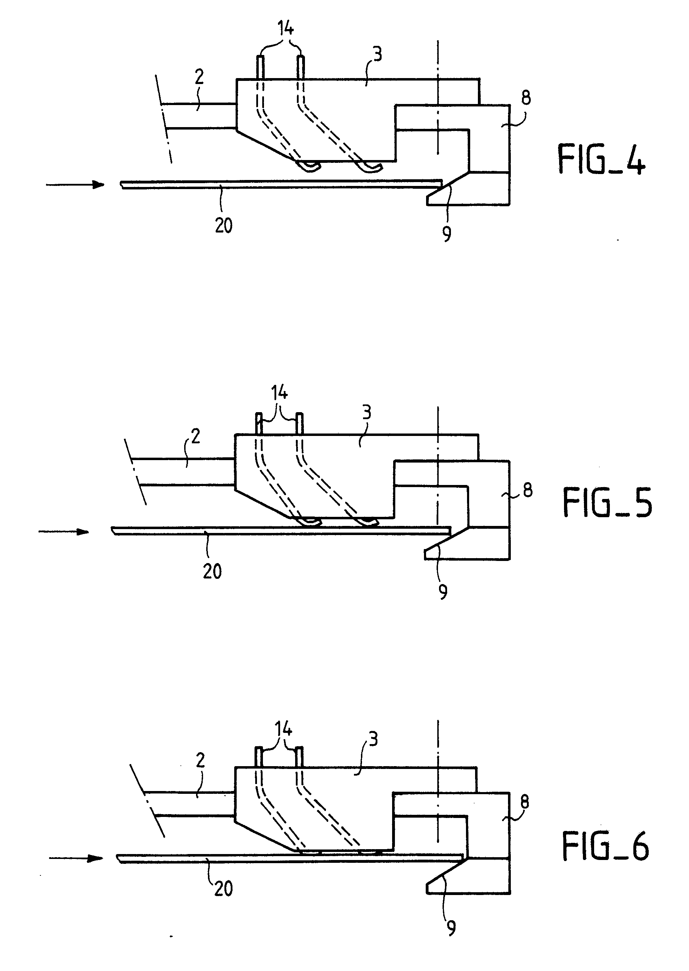

Les figures 4 à 6 permettent d'expliquer le fonctionnement du dispositif lors de l'introduction d'une carte à mémoire. Seules les parties 2 et 3 du dispositif ont été représentées ce qui suffit pour comprendre son fonctionnement. On a représenté également la carte à mémoire 20 qui en fait est guidée par le guide de carte non représenté. La flèche indique le sens du mouvement imprimé à la carte 20.

La figure 4 représente l'instant où la carte 20 arrive en contact avec la rampe 9 de la butée 8. Cette position ne constitue pas la position finale de la carte dans le lecteur de cartes. La carte étant toujours poussée et guidée et le bras 2 ayant la souplesse requise, c'est l'extrémité du bras prolongée par la butée 8 qui s'infléchit. La carte continuant sa "montée" de la rampe 9, vient le moment où elle arrive en contact avec les extrémités recourbées des conducteurs 14. Puis la carte étant encore poussée, elle parvient à sa position définitive pour permettre la lecture. Dans cette position, les conducteurs de la carte (qui ne sont pas représentés sur les figures) sont en contact avec les conducteurs 14.

La forme recourbée des conducteurs 14 permet que, dans un premier temps, ces conducteurs viennent affleurer les conducteurs de la carte. Dans un deuxième temps, la déformation élastique des conducteurs 14 assure une bonne liaison électrique avec les conducteurs de la carte. Dans cette deuxième phase, un léger frottement se produit entre les conducteurs à mettre en contact alors que la pression totale n'est pas encore établie. Ce phénomène est bon en lui-même pour assurer un juste compromis entre l'usure réciproque des conducteurs et l'auto-nettoyage permettant une liaison électrique de très bonne qualité.

Lors de l'extraction de la carte, les effets mécaniques se produisent dans un ordre strictement inverse de ceux engendrés à l'introduction.

Dans ces conditions, les conducteurs du dispositif peuvent n'être jamais en contact avec les parties plastiques de la carte, ce qui élimine tout risque de détérioration de la qualité des liaisons électriques.

Dans l'exemple d'application de l'invention décrit ci-dessus, la mise en contact électrique de la carte à mémoire et de son lecteur constitue une liaison électrique temporaire. Il entre cependant dans le cadre de la présente invention d'assurer des liaisons électriques plus durables, voire permanentes.

## Revendications

1. Dispositif de mise en contact électrique de conducteurs répartis sur un premier et sur un deuxième élément, la mise en contact des conducteurs devant être réalisée lorsque le premier élément se trouve dans une position déterminée par rapport au deuxième élément, le dispositif étant solidaire du deuxième élément, le dispositif comprenant :
- des moyens de guidage du premier élément vers ladite position déterminée,
- une butée destinée à arrêter le premier élément lorsqu'il a atteint ladite position déterminée, la butée comprenant des moyens permettant de mettre progressivement en contact lesdits conducteurs,

caractérisé en ce qu'il comprend une lame souple (2) constituée d'un bras (7) fixé par l'une de ses extrémités auxdits moyens de guidage (1) et dont l'autre extrémité est prolongée par une partie (8) constituant ladite butée.

2. Dispositif selon la revendication 1, caractérisé en ce que les moyens permettant de mettre progressivement en contact les conducteurs sont constitués par une rampe (9).

3. Dispositif selon l'une des revendications 1 ou 2, caractérisé en ce que les conducteurs (14) du deuxième élément sont supportés par un porte-contacts (3) fixé sur la lame souple (2).

4. Dispositif selon la revendication 3, caractérisé en ce que les conducteurs (14) du deuxième élément sont repliés, dans la zone de mise en contact, en forme de crosse déformable élastiquement.

5. Lecteur de cartes à mémoire, caractérisé en ce qu'il comprend un dispositif selon l'une quelconque des revendications 1 à 4.

FIG_1

FIG_2

FIG_3

FIG_4

FIG_5

FIG_6

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | EP-A-0 263 746 (FRANCELCO)<br>* Résumé; colonne 4, lignes 4-16; figures 3-6 *<br>--- | 1,2,5 | H 01 R 23/68<br>G 06 K 7/06 |
| A | US-A-3 395 377 (DALE)<br>* Colonne 1, lignes 33-37,64-66; colonne 4, lignes 25-29; colonne 5, lignes 14-24; figure 5A *<br>--- | 1,2,4 | |
| A | PATENT ABSTRACTS OF JAPAN, vol. 8, no. 137 (P-282)[1574], 26 juin 1984, page 2 P 282; & JP-A-59 36 387 (CANON K.K.) 28-02-1984<br>* Résumé *<br>----- | 1-3,5 | |

DOMAINES TECHNIQUES RECHERCHES (Int. Cl.4)

H 01 R
G 06 K

Le présent rapport a été établi pour toutes les revendications

| Lieu de la recherche | Date d'achevement de la recherche | Examinateur |
|---|---|---|
| LA HAYE | 19-07-1989 | HORAK A.L. |

EPO FORM 1503 03.82 (P0402)